# EUROPEAN PATENT APPLICATION

(11) **EP 0 748 956 A1**
(43) Date of publication of application: **18.12.1996**
(21) Application number: 96109516.3
(22) Date of filing: 13.06.1996
(51) Int. Cl.: F16H 59/04

(54) **Vehicle gearbox control device**

(30) Priority: 16.06.1995 IT TO950509
(71) Applicant: ROLTRA MORSE S.p.A., I-86077 Pozzilli (IT)
(72) Inventor: Ottino, Franco Giovanni, 56017 San Giuliano Terme (IT)
(74) Representative: Franzolin, Luigi

(57) **Abstract**

A vehicle gearbox control device (1) presenting a supporting element (2) fitted to the vehicle body (3); an intermediate element (4) rotatable in relation to the supporting element (2) about a first axis (A); and a control lever (5) fitted to and rotatable in relation to the intermediate element (4) about a pin (33) defining a second axis (B) perpendicular to the first axis (A); the intermediate element (4) being connected to the supporting element (2) by a first and second hinge (16, 18) coaxial with the first axis (A) and located on either side of the intermediate element (4); the first hinge (16) presenting a first pin (19) integral with the supporting element (2) and engaging a first seat (21) formed in the intermediate element (4); and the second hinge (18) presenting a second pin (22) fitted releasably to the supporting element (2) and engaging a second seat (24) formed in the intermediate element (4).

## Description

The present invention relates to a vehicle gearbox control device, or more specifically to a gearshift control device.

Known gearshift control devices substantially comprise a supporting element fitted to a vehicle body element; an intermediate element rotatable in relation to the supporting element about a first axis; and a control lever fitted to and rotatable in relation to the intermediate element about a pin defining a second axis perpendicular to the first axis.

Rotation of the control lever about the first and second axes is transmitted to the gearbox via respective transmission members, to respectively control selection and engagement of the gears.

Devices of the type briefly described above normally comprise a large number of components, and are therefore fairly expensive and complex to produce and assemble.

In particular, the supporting element and the intermediate element are connected by means of at least one pin constituting a separate component, which must be inserted axially through respective holes in said elements, and locked in relation to said elements by means of further auxiliary components.

It is an object of the present invention to provide a gearshift control device designed to overcome the aforementioned drawbacks typically associated with known devices.

According to the present invention, there is provided a vehicle gearbox control device comprising:
a supporting element fitted to the vehicle body;
an intermediate element;
hinge connecting means for hinging said intermediate element to said supporting element, and defining a first axis of rotation of said intermediate element in relation to said supporting element; and
a control lever fitted to and rotatable in relation to said intermediate element about a pin defining a second axis of rotation perpendicular to said first axis;
characterized in that said hinge connecting means for hinging said intermediate element to said supporting element comprise a first and second hinge coaxial with said first axis and located on either side of said intermediate element; said first hinge comprising a first pin coaxial with said first axis and connected integrally to one of said elements, and a corresponding first seat formed in the other of said elements and engaged by said first pin; said second hinge comprising a second pin coaxial with said first axis and connected releasably to one of said elements, and a corresponding second seat on the other of said elements and engaged by said second pin to secure said intermediate element to said supporting element along said first axis.

A further drawback of known devices is their considerable weight.

According to a preferred embodiment of the invention, the above drawback is eliminated by forming the supporting element and the intermediate element from plastic material.

A preferred, non-limiting embodiment of the present invention will be described by way of example with reference to the accompanying drawings, in which:
Figure 1 shows a vertical section of a gearshift control device in accordance with the teachings of the present invention;
Figure 2 shows a section along line II-II of the Figure 1 device;
Figure 3 shows a larger-scale section of a variation of a detail in Figure 2;
Figure 4 shows a section along line IV-IV of the Figure 3 detail;
Figures 5, 6 and 7 show larger-scale sections of further variations of the Figure 2 detail.

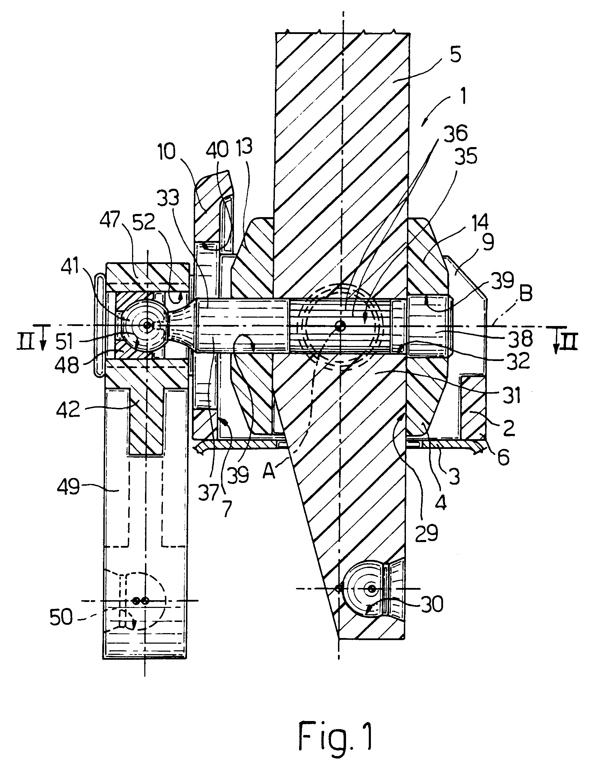

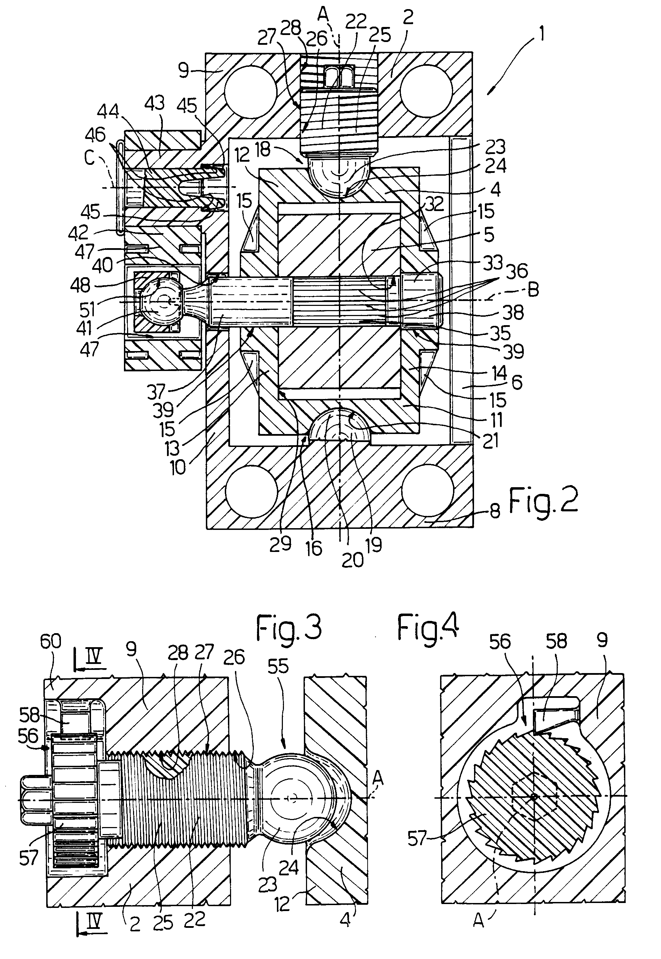

Number 1 in Figures 1 and 2 indicates a control device for a vehicle gearbox (not shown).

Device 1 substantially comprises a fixed supporting element 2 fitted rigidly to a vehicle body element 3; an intermediate element 4 rotatable in relation to supporting element 2 about a first axis A; and a control lever 5 fitted to intermediate element 4 and rotatable in relation to it about a second axis B perpendicular to axis A.

Lever 5 is thus rotatable, in relation to fixed supporting element 2, about axis A (fixed) and axis B (movable with intermediate element 4); axis A is substantially longitudinal in relation to the vehicle, and rotation about it by lever 5 provides for selecting the gears; axis B is crosswise to the vehicle, and rotation about it by lever 5 provides for engaging or disengaging the gears; and operation of lever 5 is transmitted to the gearbox (not shown) by linkage means (not shown).

Supporting element 2 presents a substantially frame-like anchoring base 6 defining a central opening 11, and from which respective walls 8, 9 extend upwards from the front and rear sides, and a lateral wall 10 extends upwards from one longitudinal side.

Intermediate element 4 is substantially parallelepiped, and is defined by a substantially flat front wall 11, a substantially flat rear wall 12, and two lateral walls 13 and 14 with strengthening ribs 15.

Intermediate element 4 is housed inside supporting element 2, with lateral wall 13 facing lateral wall 10, and walls 11, 12 respectively facing walls 8, 9 and connected to them by respective first and second hinges 16, 18 of axis A.

According to the present invention, hinge 16 comprises a pin 19, of axis A, extending integrally from wall 8 towards wall 11, and presenting a substantially semispherical head 20; and a substantially semispherical seat 21 formed in wall 11 and engaged by head 20 of pin 19. Hinge 18 comprises a pin 22, of axis A, fitted releasably to wall 9, and presenting a substantially semispherical head 23 facing wall 12; and a substantially semispherical seat 24 formed in wall 12 and engaged by head 23 of pin 22 in a predetermined axial position to axially secure intermediate element 4 to supporting element 2.

According to a first embodiment shown in Figure 2, pin 22 comprises a portion 25 presenting an external thread 26 and which is screwed inside a through hole 28, of axis A, formed in wall 9 and in turn presenting a thread 27 complementary to thread 26. Portion 25 of pin 22 may thus be screwed inside through hole 28 to axially lock intermediate element 4 at assembly, as well as take up any in-service slack between heads 20, 23 and respective seats 21, 24.

Supporting element 2 and intermediate element 4 are conveniently molded from plastic material.

Intermediate element 4 presents a longitudinal through opening 29 perpendicular to axes A and B, defined laterally by walls 13, 14 of intermediate element 4, and presenting a cross section (in a plane parallel to axes A and B) in the form of an elongated rectangle extending in the direction of axis A.

Lever 5 is fitted through opening 29 in intermediate element 4, and presents, at the bottom end, a seat 30 for a spherical articulating head (not shown) for connecting lever 5 to a remote engagement control cable (not shown).

Lever 5 also presents a substantially rectangular-section, downward-tapering intermediate portion 31 housed in sliding manner with a small amount of lateral clearance inside opening 29, and presenting a transverse through hole 32, of axis B, defining a seat for a pin 33 permitting lever 5 to pivot in relation to intermediate element 4.

Pin 33 presents an intermediate portion 35 with grooves 36, which is interference fitted inside hole 32 so that it is rigidly connected to lever 5.

Pin 33 also presents axial end portions 37, 38 engaging in radially slack manner respective holes 39, of axis B, formed respectively in lateral walls 13, 14 of intermediate element 4.

One (37) of the two axial end portions extends axially outwards of intermediate element 4 and beyond lateral wall 10 of supporting element 2 - which, for the purpose, presents a vertically elongated opening 40 - to form a spherical end head 41 which acts as an articulating element for controlling a linkage lever 42.

Lever 42 is made of plastic material, is substantially square, and is hinged to lateral wall 10 of supporting element 2 to pivot about an axis C (Figure 2) perpendicular to axis A, crosswise to the vehicle, and shifted rearwards in relation to axis B.

More specifically, and as shown clearly in Figure 2, lever 42 pivots about a pin defined by a bush 43 projecting integrally outwards from wall 10, and is locked axially to bush 43 by a fast-fit element 44 snapped inside bush 43 and presenting, on its opposite end, flexible hooks 45 designed to snap onto respective inner shoulders 46 of bush 43.

Lever 42 presents an arm 47 extending frontwards in a substantially longitudinal direction in relation to the vehicle, and connected to head 41 of pin 33 by an articulating element 48; and an arm 49 extending substantially downwards, and presenting, on its bottom end, a seat 50 for a spherical articulating head (not shown) for connection to a remote gear selection control cable (not shown).

Articulating element 48 comprises a parallelepiped block of plastic material with a low friction coefficient, and presenting a spherical seat 51 cooperating with head 41 of pin 33. Block 48 is housed in sliding manner inside an opening 52 in arm 47, and is permitted to move axially and radially in relation to axis C, but with no tangential slack in relation to it.

Device 1 operates as follows.

To select a given gear, control lever 5 is shifted laterally to rotate it, pin 33 integral with it, and intermediate element 4 about axis A; the rotation of pin 33 about axis A crosswise to it produces an upward or downward movement, along an arc of a circle, of spherical head 41 which, via articulating element 48, transmits the movement to linkage lever 42; and lever 42 rotates about axis C to activate the relative gear selection control cable.

Once the required selection position is reached, the relative gear is engaged by moving control lever 5 forwards or backwards to rotate it about axis B and so activate the relative engagement control cable.

Figures 3 to 7 show alternative embodiments of hinge 18 using the same numbering system as for the corresponding parts of hinge 18.

More specifically, hinge 55 in Figures 3 and 4 comprises a known ratchet device 56 for preventing pin 22 from unscrewing in relation to through hole 28.

Device 56 comprises a gear 57 formed in one piece on the opposite end of pin 22 to head 23; and a pawl 58 projecting towards gear 57 from an inner lateral wall of a wider end portion 60 of hole 28, and which cooperates in one-way manner with any one of the teeth of gear 57 to prevent gear 57 from rotating in the unscrewing direction of portion 25 of pin 22.

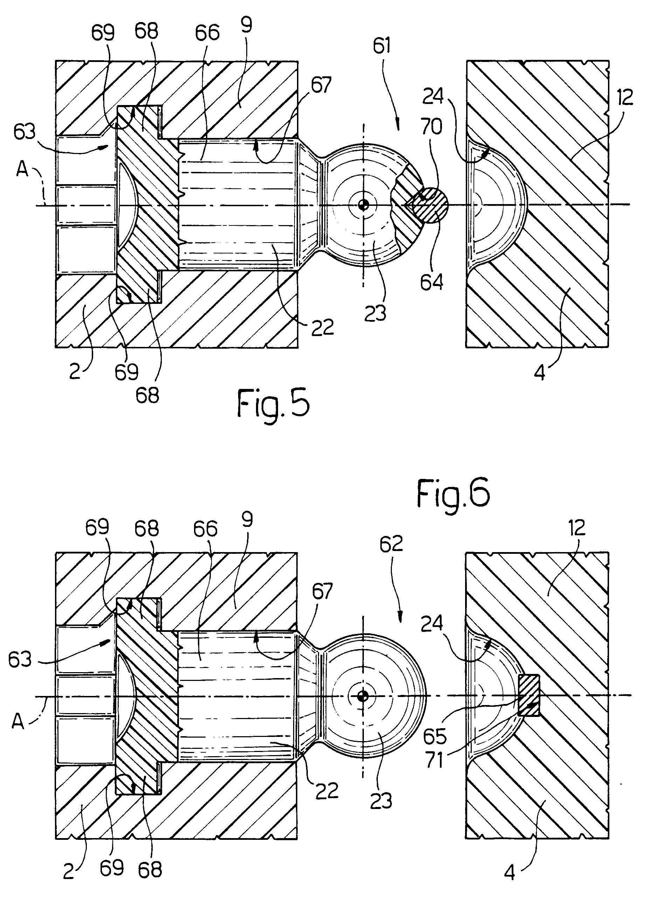

Figures 5 and 6 show respective hinges 61 and 62, each of which comprises a known bayonet connecting device 63 for securing pin 22 to wall 9; and an elastic element 64, 65 interposed between head 23 and seat 24, and cooperating with device 63 to eliminate any slack between pin 22 and seat 24.

In both cases, pin 22 presents a smooth intermediate portion 66 housed inside a through hole 67, of axis A, formed in wall 9; and device 63 comprises two lateral appendixes 68 extending outwards from the opposite end of portion 66 to head 23, and which fit inside respective substantially arc-shaped seats 69 formed in wall 9 and for snap-on retaining appendixes 68 in known manner not shown.

Elastic element 64 of hinge 61 is substantially spherical, and is housed partially and fixed inside a seat 70 on the front of head 23.

Elastic element 65 of hinge 62, on the other hand, is substantially parallelepiped, and is housed partially and fixed inside a seat 71 formed at the bottom of seat 24.

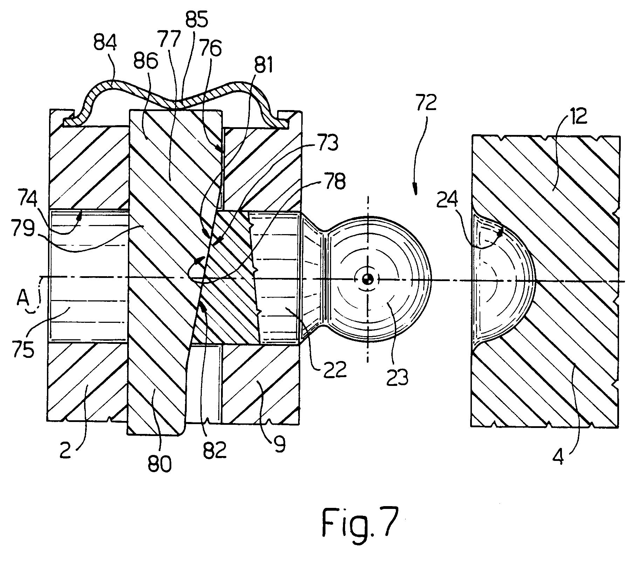

Hinge 72 in Figure 7 comprises a wedge-shaped retaining device 73 for connecting pin 22 integrally with wall 9, and for permanently keeping head 23 pressed against seat 24.

In this case, wall 9 presents a first through hole 74, of axis A, into which a smooth intermediate portion 75 of pin 22 is inserted; and a second hole 76 of an axis parallel to axis B and intersecting axis A.

Device 73 comprises a pin 77, which is inserted inside hole 76, engages a diametrical through hole 78 in pin 22, and in turn comprises an intermediate portion 79 tapering towards an end portion 80 and presenting an inclined surface 81 cooperating with a corresponding inclined surface 82 of hole 78.

Device 73 also comprises an elastic blade element 84 with its ends fitted to wall 9, and presenting a shaped intermediate portion 85 cooperating with the end 86 of pin 77 opposite end portion 80, and which is preloaded to exert axial pressure on pin 77 and so keep inclined surface 81 permanently contacting inclined surface 82. The axial component of the force exchanged between inclined surfaces 81 and 82 keeps head 23 pressed against seat 24, and provides for eliminating any in-service slack.

The advantages of the gearshift control device according to the present invention will be clear from the foregoing description.

In particular, device 1 is assembled easily and quickly, by virtue of intermediate element 4, to which control lever 5 is preassembled by means of pin 33, being simply inserted between walls 8 and 9 of supporting element 2 so that head 20 of pin 19 engages seat 21, and by virtue of pin 22 being inserted inside hole 28 in wall 9, and being connected to wall 9 so that head 23 engages seat 24 to lock intermediate element 4 to supporting element 2 along axis A.

As such, the present invention provides for simplifying production and assembly, and so reducing overall cost.

Finally, the overall weight of device 1 is reduced by forming the main parts (lever 5, supporting element 2, intermediate element 4) from plastic material.

Clearly, changes may be made to device 1 as described and illustrated herein without, however, departing from the scope of the present invention.

## Claims

1. A vehicle gearbox control device (1) comprising:
a supporting element (2) fitted to the vehicle body (3);
an intermediate element (4);
hinge connecting means (16, 18) for hinging said intermediate element (4) to said supporting element (2), and defining a first axis (A) of rotation of said intermediate element (4) in relation to said supporting element (2); and
a control lever (5) fitted to and rotatable in relation to said intermediate element (4) about a pin (33) defining a second axis (B) of rotation perpendicular to said first axis (A);
characterized in that said hinge connecting means for hinging said intermediate element (4) to said supporting element (2) comprise a first (16) and second (18) hinge coaxial with said first axis (A) and located on either side of said intermediate element (4); said first hinge (16) comprising a first pin (19) coaxial with said first axis (A) and connected integrally to one (2) of said elements, and a corresponding first seat (21) formed in the other (4) of said elements and engaged by said first pin (19); said second hinge (18) comprising a second pin (22) coaxial with said first axis (A) and connected releasably to one (2) of said elements, and a corresponding second seat (24) on the other (4) of said elements and engaged by said second pin (22) to secure said intermediate element (4) to said supporting element (2) along said first axis (A).

2. A device as claimed in Claim 1, characterized in that said first pin (19) is integral with said supporting element (2), and said first seat (21) is formed in said intermediate element (4).

3. A device as claimed in Claim 2, characterized in that said first pin (19) comprises a semispherical end head (20); and said first seat (21) is substantially semispherical and engaged by said head (20) of said first pin (19) to form said first hinge (16).

4. A device as claimed in any one of the foregoing Claims, characterized in that said second pin (22) is fitted to said supporting element (2), and said second seat (24) is formed in said intermediate element (4).

5. A device as claimed in Claim 4, characterized in that said second pin (22) presents a semispherical end head (23); and said second seat (24) is substantially semispherical and engaged by said head (23) of said second pin (22) to form said second hinge (18).

6. A device as claimed in Claim 5, characterized in that said supporting element (2) presents at least one wall (9) facing said intermediate element (4), crosswise to said first axis (A), and located on the opposite side of said intermediate element (4) to said first hinge (16); and in that said second pin (22) is inserted inside a first through hole (28, 67, 74) formed in said wall (9) and coaxial with said first axis (A), and is connected to said wall (9) by releasable retaining means (26 and 27, 63, 77 and 84).

7. A device as claimed in Claim 5 or 6, characterized in that said first hole (28) presents an internal thread (27); and said second pin (22) comprises an intermediate portion (25) presenting an external thread (26) which is screwed to the thread (27) of said first hole (28); said internal and external threads (26, 27) forming said releasable retaining means.

8. A device as claimed in Claim 7, characterized in that said second hinge (18) comprises a ratchet device (56) for preventing said second pin (22) from unscrewing in relation to said first hole (28).

9. A device as claimed in Claim 6, characterized in that said second hinge comprises an elastic element (64, 65) interposed between the head (23) of the second pin (22) and the relative second seat (24).

10. A device as claimed in Claim 9, characterized in that said releasable retaining means comprise bayonet connecting means (63) for connecting said second pin (22) to said wall (9).

11. A device as claimed in Claim 6, characterized in that said wall (9) presents a second through hole (76) with its axis parallel to said second axis (B) and intersecting said first hole (74); and in that said retaining means comprise a wedge-shaped element (77) which is inserted through said second hole (76) into a complementary-shaped third hole (78) formed in said second pin (22); and an elastic element (84) fitted to said wall (9) and cooperating with said wedge-shaped element (77) to keep the respective inclined surfaces (81, 82) of the wedge-shaped element (77) and said third hole (78) permanently contacting each other.

12. A device as claimed in any one of the foregoing Claims, characterized in that said supporting element (2) and said intermediate element (4) are made of plastic material.
